# EUROPÄISCHE PATENTANMELDUNG

(11) **EP 4 830 837 A1**
(43) Veröffentlichungstag der Anmeldung: **28.10.2026**
(21) Anmeldenummer: 25172229.4
(22) Anmeldetag: 24.04.2025
(51) Int. Cl.: B01L 3/02, G01N 35/10

(54) **VERFAHREN ZUM PIPETTIEREN MITTELS GASVERDRÄNGUNG UND GASVERDRÄNGUNGS-PIPETTIERVORRICHTUNG MIT VERRINGERTER TROPFENBILDUNGSGEFAHR**

(71) Anmelder: Chromsystems Instruments & Chemicals GmbH, 82166 Gräfelfing (DE)
(72) Erfinder: KNOOP, Oliver, München (DE); DIETZ, Maximilian, Waakirchen (DE)
(74) Vertreter: Zenz Patentanwälte Partnerschaft mbB

(57) **Zusammenfassung**

Eine Gasverdrängungs-Pipettiervorrichtung ist so ausgebildet, dass zum Dispensieren einer Flüssigkeit eine auf eine Flüssigkeitssäule in einem Pipettierkanal einwirkende Gassäule mit einem einen Überdruck aufweisenden Gasreservoir verbunden wird, um Gas in die Gassäule einzuspeisen. Zum Pipettieren wird eine vorgegebene Aufnahmemenge der Flüssigkeit aus einem Quellgefäß aspiriert und anschließend wenigstens eine Abgabemenge der aspirierten Flüssigkeit, die eine Teilmenge der Aufnahmemenge ist, in ein Zielgefäß dispensiert. Zur Verringerung der Tropfenbildungsgefahr wird vor dem Aspirieren der Aufnahmemenge eine vorgegebene Gas-Menge aspiriert, ohne diese anschließend zu dispensieren, und bei diesem Aspirieren der vorgegebenen Gas-Menge das Gas mit einem Dampf der Flüssigkeit angereichert. Dadurch ist während des sich anschließenden Pipettierens der von der vorgegebenen Gas-Menge gebildete, im Kanal oberhalb der Flüssigkeitssäule verbliebene Teil der Gassäule derart mit dem Dampf der Flüssigkeit angereichert, dass eine Erhöhung des Drucks in der Gassäule durch Verdampfen der Flüssigkeit der Flüssigkeitssäule minimiert wird.

## Beschreibung

Die Erfindung betrifft ein Verfahren zum Pipettieren mit Hilfe einer Gasverdrängungs-Pipettiervorrichtung mit wenigstens einem eine Pipettenöffnung aufweisenden Kanal, wobei zum Dispensieren einer zuvor aspirierten Flüssigkeit eine auf eine Flüssigkeitssäule der Flüssigkeit in dem Kanal einwirkende Gassäule mit einem einen Überdruck aufweisenden Gasreservoir verbunden wird, um Gas in die Gassäule einzuspeisen, wobei beim Pipettieren eine vorgegebene Aufnahmemenge der Flüssigkeit aus einem Quellgefäß aspiriert und anschließend wenigstens eine Abgabemenge der aspirierten Flüssigkeit, die eine Teilmenge der Aufnahmemenge ist, in ein Zielgefäß dispensiert wird.

Ferner betrifft die Erfindung eine Gasverdrängungs-Pipettiervorrichtung mit wenigstens einem eine Pipettenöffnung aufweisenden Kanal, einer Vorrichtung zum Positionieren der Pipettenöffnung, einer Vorrichtung zum Einstellen eines vorgegebenen Drucks in einer auf eine Flüssigkeitssäule der zu pipettierenden Flüssigkeit einwirkenden Gassäule derart, dass eine gewünschte Menge der Flüssigkeit aspiriert oder dispensiert wird, und einer Steuereinrichtung, wobei die Vorrichtung zum Einstellen eines vorgegebenen Drucks so ausgebildet ist, dass zum Dispensieren einer zuvor aspirierten Flüssigkeit die auf die Flüssigkeitssäule einwirkende Gassäule mit einem einen Überdruck aufweisenden Gasreservoir verbindbar ist, um Gas in die Gassäule einzuspeisen, wobei die Steuereinrichtung so ausgebildet ist, dass zum Pipettieren eine vorgegebene Aufnahmemenge der Flüssigkeit aus einem Quellgefäß aspiriert und anschließend wenigstens eine Abgabemenge der aspirierten Flüssigkeit, die eine Teilmenge der Aufnahmemenge ist, in ein Zielgefäß dispensiert wird.

Üblicherweise ist das Gas, das in dem Kanal der Pipettiervorrichtung auf die Flüssigkeitssäule einwirkt, Luft, so dass die eingangs genannte Pipettiervorrichtung auch als Luftverdrängungs-Pipettiervorrichtung bezeichnet wird.

Eine Luftverdrängungs-Pipettiervorrichtung, bei der eine auf die Säule der zu pipettierenden Flüssigkeit in dem Kanal einwirkende Luftsäule mit Luftreservoirs verbindbar ist, um Luft in die Luftsäule einzuspeisen oder aus ihr zu entnehmen, ist beispielsweise der von der Tecan Trading AG angebotene "Air Restriction Pipettor (ARP)", der beispielsweise in dem "TECAN - Operating Manual - Cavro^{®} Magni Flex Enclosed Frame" beschrieben ist.

Die Pipettenöffnung bildet dasjenige Ende eines Kanals, an dem die zu pipettierende Flüssigkeit aspiriert, das heißt in den Kanal aufgenommen, und (in der Regel anschließend) dispensiert, das heißt abgegeben, wird. Beginnend an seiner Pipettenöffnung nimmt der Kanal eine Flüssigkeitssäule auf, wobei bei einer Luftverdrängungs-Pipettiervorrichtung auf das "obere" Ende der Flüssigkeitssäule eine Gassäule einwirkt, d. h. auf die Oberfläche der Flüssigkeitssäule Druck ausübt. Von diesem Druck in der Gassäule hängt ab, ob die Flüssigkeit dispensiert oder aus einem Quellgefäß aspiriert wird. Näherungsweise gilt: Ist der Druck in der Gassäule höher als der auf die Flüssigkeit in dem Quellgefäß, in das die Pipettenöffnung eintaucht, oder auf eine nicht eintauchende Pipettenöffnung einwirkende Druck, so wird die Flüssigkeit der Flüssigkeitssäule dispensiert; ist der Druck geringer als der auf die Flüssigkeit in dem Quellgefäß einwirkende Druck, so wird die Flüssigkeit aus dem Quellgefäß aspiriert.

Im Unterschied zu anderen bekannten Luftverdrängungs-Pipettiervorrichtungen, bei denen ein in einem Zylinder beweglicher Kolben auf die Luftsäule einwirkt und somit die auf die Flüssigkeitssäule einwirkende Luftsäule im Kanal beidseitig abgeschlossen ist, wird bei der eingangs genannten Ausführungsform einer Pipettiervorrichtung der Druck in der Luftsäule gesteuert, indem die Luftsäule über Ventile wahlweise mit einem Luftreservoir, das heißt einem mit Luft gefüllten Behälter, verbunden wird, in dem entweder ein Überdruck oder ein Unterdruck (gegenüber dem auf die Pipettenöffnung einwirkenden Umgebungsdruck) herrscht. Soll die Pipettiervorrichtung eine Flüssigkeit aspirieren, so wird die Luftsäule mit einem Unterdruck-Behälter verbunden, so dass Luft aus der Luftsäule abgesaugt wird. Soll dagegen ein Teil der Flüssigkeitssäule dispensiert werden, so wird die Luftsäule mit einem Überdruck-Behälter verbunden, so dass Frischluft aus dem Überdruck-Behälter der Luftsäule zugeführt wird.

Sofern sich eine Flüssigkeitssäule in dem Kanal der Pipettiervorrichtung befindet, treten an der Grenzfläche zwischen der Flüssigkeitssäule und Luftsäule Flüssigkeitsmoleküle solange in die angrenzende Luftsäule über, bis dort eine Sättigungskonzentration des Dampfes der Flüssigkeit erreicht ist. Dabei stellt sich ein Sättigungsdampfdruck ein.

Befindet sich unmittelbar nach dem Aspirieren einer Flüssigkeitssäule eine Luftsäule in dem Kanal, in der keine oder wenige Flüssigkeitsmoleküle enthalten sind (die beispielsweise überwiegend aus Frischluft aus dem Überdruck-Behälter besteht) oder in der die Sättigungskonzentration noch nicht erreicht ist, so treten anschließend weitere Flüssigkeitsmoleküle in die Luftsäule über (Dampfbildung) und erhöht sich dabei der Druck in der Luftsäule solange, bis die Sättigung erreicht ist.

Je höher der Sättigungsdampfdruck der Flüssigkeit ist, desto mehr steigt der Druck in der Luftsäule an. Die Luftsäule drückt dann auf die Flüssigkeitssäule, so dass die Gefahr besteht, dass aus der Pipettenöffnung Flüssigkeit austritt (tropft). Die Gefahr ist besonders hoch bei flüchtigen organischen Verbindungen (VOC), die einen hohen Dampfdruck aufweisen.

Bei den bekannten Pipettiervorrichtungen mit einer durch einen Kolben abgeschlossenen Luftsäule kann das Problem beim Pipettieren flüchtiger organischer Verbindungen durch ein sogenanntes "Pre-Wetting" ("Vorbefeuchten") gelöst werden. Dabei wird vor dem eigentlichen Aspirieren der zu pipettierenden Flüssigkeit vorab eine kleinere Menge der Flüssigkeit mehrfach aspiriert und wieder vollständig derart dispensiert, dass dabei die Luftsäule mit der Flüssigkeit gesättigt wird. Diese Sättigung ist bei der eingangs genannten Pipettiervorrichtung nicht möglich, da die Luftsäule nicht abgeschlossen ist. Dennoch wurde auch bei eingangs genannten Pipettiervorrichtung das "Pre-Wetting" durchgeführt; es wurde aber festgestellt, dass eine Tropfenbildung dennoch auftrat und keine ausreichende Präzision beim Pipettieren erzielt wurde.

Eine weitere bekannte Maßnahme besteht darin, dass nach dem Aspirieren der Flüssigkeitssäule eine geringe Menge Luft aspiriert wird, so dass sich die Flüssigkeitssäule etwas von der Pipettenöffnung zurückzieht (sogenannte Trailing Air Gap - TAG"). Diese Maßnahme ist eine der in der Druckschrift EP 4 184 178 A1 beschriebenen Vorgehensweisen. Außerdem beschreibt diese Druckschrift die bekannte Maßnahme, den Druck innerhalb der Luftsäule mittels eines Drucksensors zu überwachen und bei einem unerwünschten Anstieg des Drucks diesen dadurch zu reduzieren, dass das Volumen der Luftsäule mittels Kolbenbewegung vergrößert wird.

Diese bekannten Maßnahmen zur Verringerung der Gefahr einer Tropfenbildung lassen sich nicht oder nur mit höherem Aufwand auf die eingangs genannte Pipettiervorrichtung übertragen. Aufgabe der Erfindung ist es daher, die Gefahr der Tropfenbildung bei der eingangs genannten Pipettiervorrichtung zu verringern.

Diese Aufgabe wird erfindungsgemäß durch ein Verfahren mit den Merkmalen des Anspruchs 1 bzw. eine Gasverdrängungs-Pipettiervorrichtung mit den Merkmalen des Anspruchs 12 gelöst.

Wie bei dem eingangs genannten bekannten Verfahren zum Pipettieren mit Hilfe einer Gasverdrängungs-Pipettiervorrichtung mit wenigstens einem eine Pipettenöffnung aufweisenden Kanal wird zum Dispensieren einer zuvor aspirierten Flüssigkeit eine auf eine Flüssigkeitssäule der Flüssigkeit in dem Kanal einwirkende Gassäule mit einem einen Überdruck aufweisenden Gasreservoir verbunden, um Gas in die Gassäule einzuspeisen. Diese Verbindung zwischen der Gassäule im Kanal und dem Gasreservoir besteht somit nur während des Zuführens von Gas (vorzugsweise gereinigte Frischluft). Beim Pipettieren wird eine vorgegebene Aufnahmemenge der Flüssigkeit aus einem Quellgefäß aspiriert und anschließend wenigstens eine Abgabemenge der aspirierten Flüssigkeit, die eine Teilmenge der Aufnahmemenge ist, in ein Zielgefäß dispensiert. Bei einer Vorrichtung mit mehreren Kanälen kann die Aufnahmemenge für jeden Kanal verschieden sein. Sofern für einen Kanal beim Pipettiervorgang nur eine Abgabemenge vorgesehen ist, kann die Abgabemenge auch die gesamte Aufnahmemenge umfassen. Erfindungsgemäß ist das Verfahren dadurch gekennzeichnet, dass vor dem Aspirieren der Aufnahmemenge der Flüssigkeit eine vorgegebene Gas-Menge aspiriert wird, ohne diese anschließend zu dispensieren. Dies schließt auch den Fall ein, dass zunächst eine beliebige größere Gas-Menge aspiriert wird und dann zunächst ein Teil dieser größeren Gasmenge dispensiert wird, so dass der im Kanal verbliebene Teil der zuvor aspirierten größeren Gas-Menge die vorgegebene Gas-Menge darstellt. Erfindungsgemäß wird beim Aspirieren der vorgegebenen Gas-Menge das Gas mit einem Dampf der Flüssigkeit angereichert, vorzugsweise sogar gesättigt. Dies hat zur Folge, dass während des sich anschließenden Pipettierens beim Aspirieren der Aufnahmemenge und beim Dispensieren der wenigstens einen Abgabemenge der von der vorgegebenen Gas-Menge gebildete, im Kanal oberhalb der Flüssigkeitssäule verbliebene Teil der Gassäule derart mit dem Dampf der Flüssigkeit angereichert ist, dass eine Erhöhung des Drucks in der Gassäule durch Verdampfen der Flüssigkeit der Flüssigkeitssäule minimiert wird.

Die vorgegebene Gas-Menge (die beim Aspirieren mit dem Dampf der Flüssigkeit angereichert, vorzugsweise sogar gesättigt wird) ist abhängig von dem Grad der Anreicherung mit dem Dampf der Flüssigkeit und von dem Volumen der Luftsäule, die nach dem anschließenden Aspirieren der Aufnahmemenge der Flüssigkeit aus dem Quellgefäß in dem Kanal oberhalb der Flüssigkeitssäule verbleibt. Dieses Volumen der Luftsäule umfasst das Volumen der vorgegebenen Gas-Menge und denjenigen Anteil der vor dem Aspirieren der vorgegebenen Gas-Menge in dem Kanal vorhandenen Luftsäule, der nach dem Aspirieren der vorgegebenen Gas-Menge und dem Aspirieren der Aufnahmemenge der Flüssigkeit in dem Kanal verblieben ist. Nach dem Aspirieren der vorgegebenen, mit der Flüssigkeit angereicherten Gas-Menge findet eine Diffusion der Flüssigkeitsmoleküle aus der Säule der angereicherten vorgegebenen Gas-Menge in die darüber befindliche Gassäule des zuvor in dem Kanal vorhandenen Gases statt, wobei am anderen Ende der Gassäule Dampf aus der Flüssigkeitssäule der Aufnahmemenge nachgespeist wird, was zu einer Erhöhung des Drucks in der Gassäule führt. Damit dieser Vorgang minimiert wird, muss die vorgegebene Gas-Menge so groß gewählt werden, dass sie einen wesentlichen Teil der Gassäule oberhalb der aspirierten Aufnahmemenge der Flüssigkeit ausmacht. Darüber hinaus kann die vorgegebene Gas-Menge bei einem größeren Grad der Sättigung des Gases geringer gewählt werden. Die genannte Diffusion ist zudem ein Vorgang, der eine gewisse Zeit benötigt. Somit hängt die vorgegebene Gas-Menge auch von der Zeitspanne ab, die beim Pipettieren nach dem Aspirieren der Aufnahmemenge bis zum Dispensieren der letzten Abgabemenge in ein Zielgefäß benötigt wird. Je länger diese Zeitspanne ist, desto größer muss die vorgegebene Gas-Menge gewählt werden. Eine Bestimmung der erforderlichen vorgegebenen Gas-Menge ist bei einer gegebenen Pipettiervorrichtung durch einfache Versuche möglich.

Bei einer Ausführungsform, bei der die Pipettiervorrichtung mehrere Kanäle aufweist, ist das erfindungsgemäße Verfahren vorzugsweise dadurch gekennzeichnet, dass die vorgegebene Gas-Menge für jeden Kanal aspiriert wird, bevor eine jeweils vorgegebene Aufnahmemenge der Flüssigkeit aus einem Quellgefäß für jeden Kanal aspiriert wird. Dies gewährleistet, dass die Grade der Anreicherung der Luftsäule mit dem Dampf der Flüssigkeit für die verschiedenen Kanäle nicht zu stark voneinander abweichen, wenn das eigentliche Pipettieren durch Aspirieren der Aufnahmemengen in die Kanäle beginnt.

Eine erste bevorzugte Grundausführungsform des erfindungsgemäßen Verfahrens zum Pipettieren ist dadurch gekennzeichnet, dass beim Aspirieren der vorgegebenen Gas-Menge das Gas mit einem Dampf der Flüssigkeit angereichert wird, indem die Pipettenöffnung oberhalb der Flüssigkeitsoberfläche des Quellgefäßes positioniert und die vorgegebene Gas-Menge aspiriert wird, wobei die Pipettenöffnung derart über der Flüssigkeitsoberfläche im Quellgefäß positioniert wird, dass das aspirierte Gas Gas (vorzugsweise Luft) ist, das mit der im Quellgefäß verdunsteten Flüssigkeit angereichert, vorzugsweise gesättigt ist. Bei einer bevorzugten Ausführungsform wird die Pipettenöffnung beim Aspirieren der Gas-Menge wenige Millimeter, vorzugsweise etwa 1 mm bis 5 mm, besonders bevorzugt etwa 1,5 bis 2,5 mm, über der Flüssigkeitsoberfläche positioniert. Je kleiner die Öffnung des Quellgefäßes ist, durch die die Pipette zu der Flüssigkeit hindurchgeführt wird, das heißt, je abgeschlossener das Volumen in dem Quellgefäß über der Flüssigkeitsoberfläche ist, desto größer kann der Abstand der Pipettenöffnung von der Flüssigkeitsoberfläche beim Aspirieren der vorgegebenen Gas-Menge sein.

Bei einer bevorzugten Weiterbildung dieser ersten Grundausführungsform des erfindungsgemäßen Verfahrens zum Pipettieren wird beim Aspirieren der vorgegebenen Gas-Menge das Gas mit einem Dampf der Flüssigkeit angereichert, indem (a) eine vorgegebene Befeuchtungsmenge der Flüssigkeit aus dem Quellgefäß aspiriert und anschließend wieder in das Quellgefäß dispensiert, (b) die Pipettenöffnung aus der Flüssigkeit der Quellgefäßes herausgehoben und oberhalb der Flüssigkeitsoberfläche des Quellgefäßes positioniert und (c) in der Position oberhalb der Flüssigkeitsoberfläche die vorgegebene Gas-Menge aspiriert wird. Hierbei wird somit das oben beschriebene, aus dem Stand der Technik bekannte "Vorbefeuchten" ("Pre-Wetting") dem Aspirieren der vorgegebenen Gas-Menge vorgeschaltet, um die im Kanal vorhandene Gassäule in der Nähe der Pipettenöffnung mit dem Dampf der Flüssigkeit anzureichern.

Eine besonders bevorzugte Weiterbildung dieser ersten Grundausführungsform ist dadurch gekennzeichnet, dass im Schritt (a) die vorgegebene Befeuchtungsmenge der Flüssigkeit derart in das Quellgefäß teilweise dispensiert wird, dass ein den Kanal nicht verschließender Rest dieser Flüssigkeit an der Innenwandung des Kanals verbleibt, und im Schritt (c) die vorgegebene Gas-Menge derart aspiriert wird, dass das aspirierte Gas zumindest einen Teil des im Schritt (a) an der Innenwandung verbliebenen Rests der Flüssigkeit aufnimmt. Die Befeuchtungsmenge ist eine geringe Menge, die einen kurzen Abschnitt des Kanals an der Pipettenöffnung füllt, beispielsweise 100 µl. Sie dient lediglich dazu, die Innenwand der Pipette zu benetzen, so dass ein den Kanal nicht verschließender, das heißt ein Vorbeiströmen des Gases gestattender Rest der Flüssigkeit an der Innenwand verbleibt. Beim Aspirieren der vorgegebenen Gas-Menge wird dieser Rest zumindest größtenteils verdampft und vom Gas aufgenommen.

Eine zweite bevorzugte Grundausführungsform des erfindungsgemäßen Verfahrens zum Pipettieren ist dadurch gekennzeichnet, dass beim Aspirieren der vorgegebenen Gas-Menge das Gas mit dem Dampf der Flüssigkeit angereichert wird, indem (a) eine vorgegebene Befeuchtungsmenge der Flüssigkeit aus dem Quellgefäß aspiriert und anschließend wieder in das Quellgefäß derart teilweise dispensiert wird, dass ein den Kanal nicht verschließender Rest dieser Flüssigkeit an der Innenwandung des Kanals verbleibt, (b) die Pipettenöffnung aus der Flüssigkeit der Quellgefäßes herausgehoben und oberhalb der Flüssigkeitsoberfläche des Quellgefäßes positioniert wird und (c) in der Position oberhalb der Flüssigkeitsoberfläche die vorgegebene Gas-Menge derart aspiriert wird, dass das aspirierte Gas zumindest einen Teil des im Schritt (a) an der Innenwandung verbliebenen Rests der Flüssigkeit aufnimmt. Diese zweite Grundausführungsform nutzt allein die Methode der Anreicherung der aspirierten Gas-Menge mit dem Dampf der Flüssigkeit, die bei der ersten Grundausführungsform optional zusätzlich ausgeführt wird. Bei dieser zweiten Grundausführungsform braucht die Pipettenöffnung während des Schrittes (c) nicht zwingend in einem geringem Abstand über der Flüssigkeitsoberfläche des Quellgefäßes positioniert zu sein. Auch braucht das Volumen in dem Quellgefäß über der Flüssigkeitsoberfläche nicht derart abgeschlossen zu sein, wie dies bei der ersten Grundausführungsform erforderlich ist.

Das Verfahren der Anreicherung gemäß der oben genannten ersten Grundausführungsform ist bei der zweiten nur optional und zugleich eine bevorzugte Weiterbildung, bei der die Pipettenöffnung im Schritt (b) derart über der Flüssigkeitsoberfläche im Quellgefäß positioniert wird, dass das im Schritt (c) aspirierte Gas mit dem Dampf der im Quellgefäß verdunsteten Flüssigkeit angereichertes Gas ist.

Bei einer bevorzugten Weiterbildung des Verfahrens zum Pipettieren, bei dem zum Anreichern des Gases der vorgegebenen Gas-Menge mit dem Dampf der Flüssigkeit die Schritte (a) des Aspirierens und anschließenden Dispensierens einer Befeuchtungsmenge, (b) des Positionierens der Pipettenöffnung oberhalb der Flüssigkeitsoberfläche des Quellgefäßes und (c) des Aspirierens der vorgegebenen Gas-Menge oberhalb der Flüssigkeitsoberfläche ausgeführt werden, wird die vorgegebene Gas-Menge in zwei oder mehr Teilmengen aufgeteilt, wobei die Teilmengen nacheinander aspiriert werden, indem die Schritte (a) bis (c) für jede der Teilmengen nacheinander ausgeführt werden. Dies ermöglicht eine stärkere Anreicherung des Gases mit dem Dampf der Flüssigkeit, weil für die Anreicherung derselben vorgegebenen Gas-Menge ein zwei- oder mehrmaliges Benetzen durch Wiederholung des Schrittes (a) des Aspirierens und anschließenden Dispensierens der Befeuchtungsmenge ausgeführt wird.

Bei einer Weiterbildung dieses Verfahrens, bei der die Pipettiervorrichtung mehrere Kanäle aufweist, werden die Schritte (a) bis (c) für jeden Kanal für eine Teilmenge ausgeführt, bevor die Schritte (a) bis (c) für jeden Kanal für die nächste Teilmenge wiederholt werden. Dadurch weichen die Grade der Anreicherung der Luftsäule mit dem Dampf der Flüssigkeit für die verschiedenen Kanäle nicht zu stark voneinander ab.

Bei einer bevorzugten Ausführungsform sämtlicher vorgenannten Ausführungsformen des Verfahrens wird jeder Kanal mit einer die Pipettenöffnung aufweisenden auswechselbaren Pipettenspitze versehen und entspricht die aspirierte vorgegebene Gas-Menge dem 0,5-fachen bis 5-fachen, vorzugsweise dem 0,7-fachen bis 2-fachen, besonders bevorzugt dem 1,5-fachen, des von der Pipettenspitze aufnehmbaren Volumens.

Die eingangs beschriebene bekannte Gasverdrängungs-Pipettiervorrichtung weist wenigstens einen eine Pipettenöffnung aufweisenden Kanal, eine Vorrichtung zum Positionieren der Pipettenöffnung, eine Vorrichtung zum Einstellen eines vorgegebenen Drucks in einer auf eine Flüssigkeitssäule der zu pipettierenden Flüssigkeit einwirkenden Gassäule derart, dass eine gewünschte Menge der Flüssigkeit aspiriert oder dispensiert wird, und eine Steuereinrichtung auf. Die Vorrichtung zum Einstellen eines vorgegebenen Drucks ist so ausgebildet, dass zum Dispensieren einer zuvor aspirierten Flüssigkeit die auf die Flüssigkeitssäule einwirkende Gassäule mit einem einen Überdruck aufweisenden Gasreservoir verbindbar ist, um Gas in die Gassäule einzuspeisen. Die Steuereinrichtung ist so ausgebildet, dass zum Pipettieren eine vorgegebene Aufnahmemenge der Flüssigkeit aus einem Quellgefäß aspiriert und anschließend wenigstens eine Abgabemenge der aspirierten Flüssigkeit, die eine Teilmenge der Aufnahmemenge ist, in ein Zielgefäß dispensiert wird. Erfindungsgemäß ist diese bekannte Gasverdrängungs-Pipettiervorrichtung dadurch gekennzeichnet, dass die Steuereinrichtung so ausgebildet ist, dass vor dem Aspirieren der Aufnahmemenge der Flüssigkeit eine vorgegebene Gas-Menge aspiriert wird, ohne diese anschließend zu dispensieren. Bei diesem Aspirieren der vorgegebenen Gas-Menge wird das Gas mit einem Dampf der Flüssigkeit angereichert, so dass während des sich anschließenden Pipettierens nach dem Aspirieren der Aufnahmemenge und beim Dispensieren der wenigstens einen Abgabemenge die von der vorgegebenen Gas-Menge gebildete, im Kanal oberhalb der Flüssigkeitssäule verbliebene Gassäule derart mit dem Dampf der Flüssigkeit angereichert ist, dass eine Erhöhung des Drucks in der Gassäule durch Verdampfen der Flüssigkeit der Flüssigkeitssäule minimiert wird.

Bei einer ersten bevorzugten Grundausführungsform der erfindungsgemäßen Gasverdrängungs-Pipettiervorrichtung ist die Steuereinrichtung so ausgebildet, dass beim Aspirieren der vorgegebenen Gas-Menge das Gas mit dem Dampf der Flüssigkeit angereichert wird, indem die Pipettenspitze oberhalb der Flüssigkeitsoberfläche des Quellgefäßes positioniert und die vorgegebene Gas-Menge aspiriert wird, wobei die Pipettenspitze derart über der Flüssigkeitsoberfläche im Quellgefäß positioniert wird, dass das aspirierte Gas mit dem Dampf der im Quellgefäß verdunsteten Flüssigkeit angereichertes Gas ist.

Bei einer zweiten bevorzugten Grundausführungsform der erfindungsgemäßen Gasverdrängungs-Pipettiervorrichtung ist die Steuereinrichtung so ausgebildet, dass beim Aspirieren der vorgegebenen Gas-Menge das Gas mit dem Dampf der Flüssigkeit angereichert wird, indem (a) eine vorgegebene Befeuchtungsmenge der Flüssigkeit aus dem Quellgefäß aspiriert und anschließend wieder in das Quellgefäß derart teilweise dispensiert wird, dass ein den Kanal nicht verschließender Rest dieser Flüssigkeit an der Innenwandung des Kanals verbleibt, (b) die Pipettenspitze aus der Flüssigkeit der Quellgefäßes herausgehoben und oberhalb der Flüssigkeitsoberfläche des Quellgefäßes positioniert wird und (c) in der Position oberhalb der Flüssigkeitsoberfläche die vorgegebene Gas-Menge derart aspiriert wird, dass das aspirierte Gas zumindest einen Teil des im Schritt (a) an der Innenwandung verbliebenen Rests der Flüssigkeit aufnimmt.

Vorzugsweise werden die Merkmale der ersten und der zweiten bevorzugten Grundausführungsform miteinander kombiniert, um einen maximalen Grad der Anreicherung, vorzugsweise eine Sättigung, der aspirierten vorgegebenen Gas-Menge mit dem Dampf der Flüssigkeit zu erreichen.

Eine bevorzugte Weiterbildung der Gasverdrängungs-Pipettiervorrichtung ist dadurch gekennzeichnet, dass jeder Kanal eine auswechselbare Pipettenspitze aufweist und dass die aspirierte vorgegebene Gas-Menge dem 0,5-fachen bis 5-fachen, vorzugsweise dem 0,7-fachen bis 2-fachen, besonders bevorzugt dem 1,5-fachen, des von der Pipettenspitze aufnehmbaren Volumens entspricht.

Vorteilhafte und/oder bevorzugte Weiterbildungen der Erfindung sind in den Unteransprüchen gekennzeichnet.

Im folgenden wird die Erfindung anhand von in den Zeichnungen dargestellten bevorzugten Ausführungsformen näher erläutert. In den Zeichnungen zeigen:

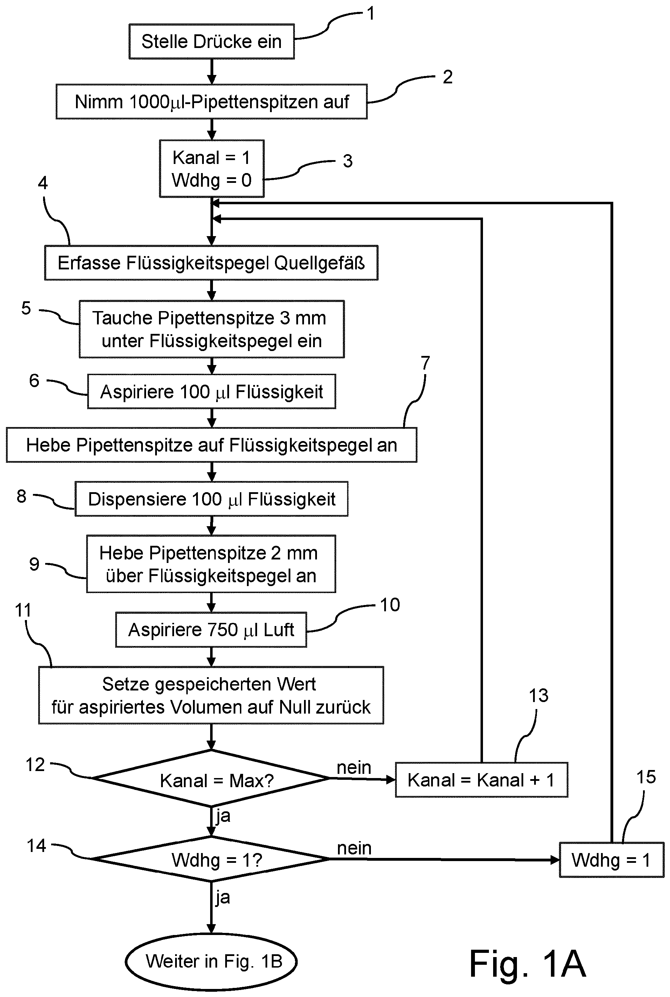

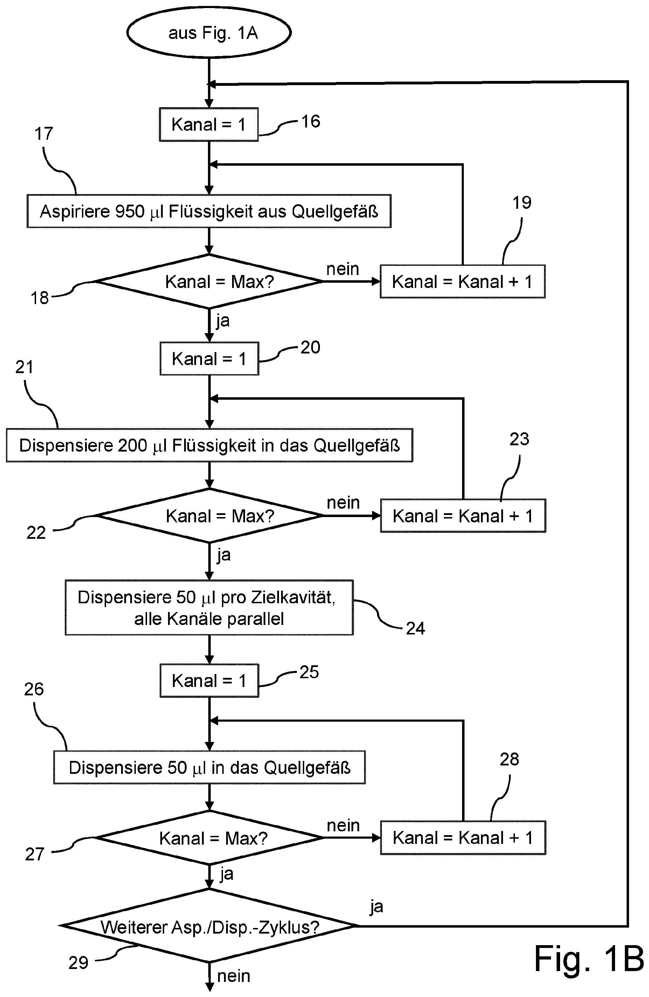

Figuren 1A und 1B ein schematisches Ablaufdiagramm einer bevorzugten Ausführungsform des erfindungsgemäßen Verfahrens.

Bei der zur Durchführung des erfindungsgemäßen Verfahrens bevorzugt verwendeten automatisierten Pipettiervorrichtung wird zum Erzeugen der zum Aspirieren oder zum Dispensieren einer Flüssigkeit erforderlichen Drücke in der Luftsäule des Pipettierkanals (bzw. der Luftsäulen in den Pipettierkanälen) kein Kolbensystem verwendet. Vielmehr wird einem Pipettierkanal Luft zugeführt, indem der Pipettierkanal über eine Ventilsteuerung mit einem ersten Druckluftbehälter verbunden wird, der einen höheren Druck als der Umgebungsdruck aufweist (sogenannter Überdruck). Andererseits wird dem Pipettierkanal Luft entnommen, indem der Kanal über eine Ventilsteuerung mit einem zweiten Druckluftbehälter verbunden wird, der einen geringeren Druck als der Umgebungsdruck aufweist (sogenannter Unterdruck). Der Unterdruck in dem zweiten Druckluftbehälter wird geregelt, indem mittels einer Pumpe über ein erstes Ventil Luft aus dem zweiten Druckluftbehälter gesaugt werden kann, wobei über ein zweites Ventil Frischluft von außen angesaugt und dem zweiten Druckluftbehälter zugeführt werden kann. Wird das zweite Ventil geöffnet, so steigt der Druck (bzw. sinkt der negative Druck oder Unterdruck) und nähert sich dem Außendruck an. Wird das erste Ventil zur Ansaugseite der Pumpe geöffnet, so sinkt der Druck (bzw. steigt der negative Druck oder Unterdruck) in dem zweiten Druckluftbehälter. Mithilfe einer geeigneten Ansteuerung der Ventile und unter Verwendung von Drucksensoren kann ein gewünschter Unterdruck in dem zweiten Druckluftbehälter eingestellt werden, der bei einer gegebenen Dimensionierung eines Pipettierkanals einem bestimmten Volumenstrom (gemessen in Mikroliter pro Sekunde) beim Aspirieren entspricht. Der entgegengesetzte Anschluss der Pumpe, an dem ein Überdruck erzeugt wird, ist über ein drittes Ventil mit dem ersten Druckluftbehälter verbunden, wobei der Druckluftbehälter über ein viertes Ventil nach außen entleert werden kann. Wird bei laufender Pumpe das dritte Ventil geöffnet, so steigt der Druck in dem ersten Druckluftbehälter. Wird das vierte Ventil geöffnet, so sinkt der Druck und nähert sich dem Außendruck an. Wiederum kann mittels einer geeigneten Ansteuerung der beiden Ventile ein gewünschter Überdruck in dem ersten Druckluftbehälter eingestellt werden, der bei einer gegebenen Dimensionierung eines Pipettierkanals einem bestimmten Volumenstrom beim Dispensieren entspricht.

Sobald die gewünschten Drücke (Überdruck und Unterdruck) in den beiden Druckluftbehältern eingestellt sind, können über die Ventilsteuerungen der Kanäle das Aspirieren oder das Dispensieren der gewünschten Volumina gesteuert werden.

Die Figuren 1A und 1B zeigen den bevorzugten Verfahrensablauf beim Pipettieren, wobei die Verfahrensschritte, die der Verringerung der Tropfenbildungsgefahr dienen, vor dem eigentlichen Pipettieren ausgeführt werden. Diese Verfahrensschritte sind in Figur 1A dargestellt, während die sich anschließenden Verfahrensschritte des als solches bekannten eigentlichen Pipettierens in Figur 1B gezeigt sind.

Bei dem in den Figuren 1A und 1B gezeigten Beispiel wird eine flüchtige organische Flüssigkeit, beispielsweise Methanol, pipettiert, wobei eine 1000µl-Einweg-Pipettenspitze verwendet wird und pro Kanal jeweils 50 µl in 14 Aufnahmegefäße ("Cavities") dispensiert werden.

Zunächst werden im Schritt 1 die gewünschten Drücke in den Druckluftbehältern eingestellt, beispielsweise ein Überdruck von 750 mbar und ein Unterdruck von 500 mbar. Anschließend werden im Schritt 2 für jeden Kanal die Pipettenspitzen aufgenommen, so dass sie an den unteren Enden der Kanäle gehalten werden. Schließlich werden die Variablen für den Kanalzähler auf den Wert 1 und für die Wiederholung auf den Wert 0 gesetzt (Schritt 3).

Dann wird die Pipette dem Quellgefäß mit der zu pipettierenden Flüssigkeit (hier Methanol) zugeführt. Bei diesem Beispiel handelt es sich um eine 30 ml-Flasche. Im Schritt 4 wird der Flüssigkeitspegel erfasst, damit anschließend die Pipettenöffnung der Pipettenspitze korrekt positioniert werden kann. Im Schritt 5 wird die Pipettenöffnung etwa 3 mm unter der Flüssigkeitsoberfläche positioniert. Im Schritt 6 werden bei dem dargestellten Beispiel 100 µl Flüssigkeit aspiriert, wobei die hier aspirierte Menge in weiten Bereichen variiert werden kann. Die Menge sollte ausreichend hoch sein, um eine Benetzung der Innenwand des Kanals zu bewirken und dort nach dem Dispensieren der zuvor aspirierten Flüssigkeit eine ausreichende Menge an Restflüssigkeit zurückzulassen. Andererseits sollte die Menge nicht zu hoch sein, um den zeitlichen Aufwand zu minimieren. Im Schritt 7 wird die Pipettenspitze angehoben, so dass sich die Pipettenöffnung an der Flüssigkeitsoberfläche befindet. In dieser Position wird im Schritt 8 die zuvor aspirierte Flüssigkeitsmenge, hier 100 µl, vollständig dispensiert. Die Schritte 5 bis 8 dienen somit einer teilweisen Benetzung der Innenwand des Kanals. Zugleich führen diese Schritte aufgrund des Verdampfens der Flüssigkeit an der Grenzfläche zwischen Flüssigkeitssäule und Luftsäule im Kanal dazu, dass ein Teil der Luftsäule im Kanal mit dem Dampf der flüchtigen Flüssigkeit angereichert wird.

Im darauffolgenden Schritt 9 wird die Pipettenspitze in geringem Abstand über der Flüssigkeitsoberfläche, beispielsweise 2 mm über dem Flüssigkeitsspiegel, positioniert. In dieser Position wird im Schritt 10 eine vorgegebene Luftmenge, im dargestellten Beispiel 750 µl Luft, aspiriert. Diese Menge entspricht etwa 75 % des Aufnahmevolumens der Pipettenspitze. Das Aspirieren der vorgegebenen Luftmenge erfolgt während des Positionierens der Pipettenöffnung innerhalb des Quellgefäßes (hier der 30 ml-Flasche) kurz über der Flüssigkeitsoberfläche. In diesem Bereich ist die Luft mit dem Dampf der Flüssigkeit (hier Methanol) gesättigt oder zumindest stark angereichert. Die 750 µl aspirierte Luft verbleiben anschließend in dem Pipettenkanal, d. h., es findet kein Dispensieren der angesagten Luft statt. Stattdessen wird im Schritt 11 der in der Steuerung gespeicherte Wert für das aspirierte Volumen auf Null zurückgesetzt. Damit wird eine im Normalbetrieb übliche Sicherheitsmaßnahme vermieden, die ohne dieses Rücksetzen dazu führen würde, dass das aspirierte Volumen anschließend auch wieder dispensiert wird. Ein Dispensier-Schritt würde nämlich dazu führen, dass an dem von der Pipettenspitze abgewandten Ende des Pipettierkanals Frischluft aus dem Überdruck-Druckluftbehälter in die Luftsäule eingespeist wird. Das Aspirieren einer vorgegebenen Luftmenge (hier 750 µl) ohne anschließendes Dispensieren ist somit ein wesentliches Element dieser Ausführungsform des erfindungsgemäßen Verfahrens.

Anschließend wird im Schritt 12 geprüft, ob die Variable, die den Kanal zählt, einen vorgegebenen Maximalwert erreicht hat. Sofern dies nicht der Fall ist, wird die Variable inkrementiert (Schritt 13) und das Verfahren mit Schritt 4 fortgesetzt. Somit werden die Schritte 4 bis 11 für jeden Kanal ausgeführt. Wird im Schritt 12 festgestellt, dass die den Kanal zählende Variable den Maximalwert erreicht hat, das heißt, die Schritte 4 bis 11 für sämtliche Kanäle ausgeführt worden sind, so wird im Schritt 14 geprüft, ob die die Wiederholung kennzeichnende Variable, die anfangs im Schritt 3 auf Null gesetzt wurde, den Wert 1 erreicht hat. Sofern dies nicht der Fall ist, ist eine Wiederholung der Schritte 4 bis 11 für jeden Kanal erforderlich und wird die Wiederholungs-Variable im Schritt 15 auf 1 gesetzt. Anschließend kehrt das Verfahren zum Schritt 4 zurück. Die auf diese Weise programmierte Wiederholung der Schritte 4 bis 11 führt dazu, dass 2 × 750 µl mit dem Dampf der Flüssigkeit angereicherte oder gesättigte Luft und somit das 1,5-fache des Volumens der Pipettenspitze in jedem Kanal aspiriert werden, ohne dass diese Luft anschließend wieder dispensiert wird. Es hat sich gezeigt, dass diese Menge ausreicht, um einen ausreichend großen Anteil der Luftsäule mit dem Dampf der Flüssigkeit anzureichern, und dass dadurch die Tropfenbildung beim nachfolgenden Pipettieren vermieden wird.

Die Verfahrensschritte des nachfolgenden Pipettierens sind in Figur 1B veranschaulicht.

Zunächst wird sukzessive für jeden Kanal eine hier als Aufnahmemenge bezeichnete Menge von 950 µl Flüssigkeit (hier Methanol) aus dem Quellgefäß (hier der 30 ml-Flasche) aspiriert. Dazu wird im Schritt 16 die Kanalzähler-Variable auf 1 gesetzt. Anschließend wird die Pipettenspitze in der üblichen Weise in die Flüssigkeit des Quellgefäßes eingetaucht und werden 950 µl im Schritt 17 aspiriert. Dann wird im Schritt 18 geprüft, ob die Kanalzähler-Variable den Maximalwert erreicht hat. Sofern dies nicht der Fall ist, wird die Variable im Schritt 19 inkrementiert, und der Verfahrensablauf kehrt zum Schritt 17 zurück.

Anschließend wird im Schritt 20 die Kanalzähler-Variable wieder auf 1 gesetzt. Dann werden für jeden Kanal sukzessive 200 µl der Flüssigkeitssäule im Pipettierkanal in das Quellgefäß zurück dispensiert. Durch diesen "Pre-Dispense"-Schritt wird die Präzision des Pipettierens erhöht. Auch hier wird in der üblichen Weise in den Schritten 22 und 23 die Kanalzähler-Variable geprüft und inkrementiert, bis dieser "Pre-Dispense"-Schritt für sämtliche Kanäle ausgeführt worden ist.

Im Schritt 24 werden dann jeweils 50 µl (die so-genannte Abgabemenge) sukzessive in 14 Zielgefäße ("Cavities") dispensiert, wobei dies für alle Kanäle parallel ausgeführt wird. Somit werden insgesamt 700 µl pro Kanal dispensiert.

Anschließend wird die Pipettenspitze wieder in das Quellgefäß eingeführt und werden im Schritt 26 sukzessive für jeden Kanal (Programmschleife der Schritte 25, 27 und 28) die verbliebenen 50 µl in das Quellgefäß zurück dispensiert.

Im Schritt 29 wird schließlich abgefragt, ob ein weiterer Aspirier-Dispensier-Zyklus ausgeführt werden soll. Wenn dies der Fall ist, kehrt der Verfahrensablauf zum Schritt 16 zurück. Anderenfalls ist das Verfahren beendet.

Bei dem entsprechenden bevorzugten Ausführungsbeispiel der erfindungsgemäßen Luftverdrängungs-Pipettiervorrichtung ist eine Steuereinrichtung so konfiguriert, dass sie die Ausführung der vorgenannten, anhand der Figuren 1A und 1B beschriebenen Schritte bewirkt. Die Steuereinrichtung umfasst üblicherweise sämtliche Elemente eines programmgesteuerten Computers, insbesondere CPU, Speicher, Eingabeeinrichtungen und Anzeigeeinrichtungen. Außerdem ist die Steuereinrichtung über Eingabe-Schnittstellen mit Sensoren gekoppelt, die die Betriebszustände, insbesondere die Drücke und Temperaturen sowie die Positionen der Pipetten, erfassen können. Darüber hinaus ist die Steuereinrichtung über Ausgabe-Schnittstellen mit Aktoren gekoppelt, die die Ventile und die Antriebe zum Bewegen der Pipetten ansteuern.

## Patentansprüche

1. Verfahren zum Pipettieren mit Hilfe einer Gasverdrängungs-Pipettiervorrichtung mit wenigstens einem eine Pipettenöffnung aufweisenden Kanal, wobei zum Dispensieren einer zuvor aspirierten Flüssigkeit eine auf eine Flüssigkeitssäule der Flüssigkeit in dem Kanal einwirkende Gassäule mit einem einen Überdruck aufweisenden Gasreservoir verbunden wird, um Gas in die Gassäule einzuspeisen,
wobei beim Pipettieren eine vorgegebene Aufnahmemenge der Flüssigkeit aus einem Quellgefäß aspiriert und anschließend wenigstens eine Abgabemenge der aspirierten Flüssigkeit, die eine Teilmenge der Aufnahmemenge ist, in ein Zielgefäß dispensiert wird,
**dadurch gekennzeichnet,**
**dass** vor dem Aspirieren der Aufnahmemenge der Flüssigkeit eine vorgegebene Gas-Menge aspiriert wird, ohne diese anschließend zu dispensieren, wobei beim Aspirieren der vorgegebenen Gas-Menge das Gas mit einem Dampf der Flüssigkeit angereichert wird, so dass während des sich anschließenden Pipettierens beim Aspirieren der Aufnahmemenge und beim Dispensieren der wenigstens eine Abgabemenge der von der vorgegebenen Gas-Menge gebildete, im Kanal oberhalb der Flüssigkeitssäule verbliebene Teil der Gassäule derart mit dem Dampf der Flüssigkeit angereichert ist, dass eine Erhöhung des Drucks in der Gassäule durch Verdampfen der Flüssigkeit der Flüssigkeitssäule minimiert wird.

2. Verfahren zum Pipettieren nach Anspruch 1, **dadurch gekennzeichnet, dass** die Pipettiervorrichtung mehrere Kanäle aufweist und dass die vorgegebene Gas-Menge für jeden Kanal aspiriert wird, bevor eine jeweils vorgegebene Aufnahmemenge der Flüssigkeit aus einem Quellgefäß für jeden Kanal aspiriert wird.

3. Verfahren zum Pipettieren nach Anspruch 1 oder 2, **dadurch gekennzeichnet, dass** beim Aspirieren der vorgegebenen Gas-Menge das Gas mit einem Dampf der Flüssigkeit angereichert wird, indem die Pipettenöffnung oberhalb der Flüssigkeitsoberfläche des Quellgefäßes positioniert und die vorgegebene Gas-Menge aspiriert wird, wobei die Pipettenöffnung derart über der Flüssigkeitsoberfläche im Quellgefäß positioniert wird, dass das aspirierte Gas mit dem Dampf der im Quellgefäß verdunsteten Flüssigkeit angereichertes Gas ist.

4. Verfahren zum Pipettieren nach Anspruch 3, **dadurch gekennzeichnet, dass** beim Aspirieren der vorgegebenen Gas-Menge das Gas mit einem Dampf der Flüssigkeit angereichert wird, indem
a) eine vorgegebene Befeuchtungsmenge der Flüssigkeit aus dem Quellgefäß aspiriert und anschließend wieder in das Quellgefäß dispensiert wird,
b) die Pipettenöffnung aus der Flüssigkeit der Quellgefäßes herausgehoben und oberhalb der Flüssigkeitsoberfläche des Quellgefäßes positioniert wird und
c) in der Position oberhalb der Flüssigkeitsoberfläche die vorgegebene Gas-Menge aspiriert wird.

5. Verfahren zum Pipettieren nach Anspruch 4, **dadurch gekennzeichnet, dass** im Schritt a) die vorgegebene Befeuchtungsmenge der Flüssigkeit derart in das Quellgefäß teilweise dispensiert wird, dass ein den Kanal nicht verschließender Rest dieser Flüssigkeit an der Innenwandung des Kanals verbleibt, und im Schritt c) die vorgegebene Gas-Menge derart aspiriert wird, dass das aspirierte Gas zumindest einen Teil des im Schritt a) an der Innenwandung verbliebenen Rests der Flüssigkeit aufnimmt.

6. Verfahren zum Pipettieren nach Anspruch 1 oder 2, **dadurch gekennzeichnet, dass** beim Aspirieren der vorgegebenen Gas-Menge das Gas mit dem Dampf der Flüssigkeit angereichert wird, indem
a) eine vorgegebene Befeuchtungsmenge der Flüssigkeit aus dem Quellgefäß aspiriert und anschließend wieder in das Quellgefäß derart teilweise dispensiert wird, dass ein den Kanal nicht verschließender Rest dieser Flüssigkeit an der Innenwandung des Kanals verbleibt,
b) die Pipettenöffnung aus der Flüssigkeit der Quellgefäßes herausgehoben und oberhalb der Flüssigkeitsoberfläche des Quellgefäßes positioniert wird und
c) in der Position oberhalb der Flüssigkeitsoberfläche die vorgegebene Gas-Menge derart aspiriert wird, dass das aspirierte Gas zumindest einen Teil des im Schritt a) an der Innenwandung verbliebenen Rests der Flüssigkeit aufnimmt.

7. Verfahren zum Pipettieren nach Anspruch 6, **dadurch gekennzeichnet, dass** die Pipettenöffnung im Schritt b) derart über der Flüssigkeitsoberfläche im Quellgefäß positioniert wird, dass das im Schritt c) aspirierte Gas mit dem Dampf der im Quellgefäß verdunsteten Flüssigkeit angereichertes Gas ist.

8. Verfahren zum Pipettieren nach einem der Ansprüche 4 - 7, **dadurch gekennzeichnet, dass** die vorgegebene Gas-Menge in zwei oder mehr Teilmengen aufgeteilt wird, wobei die Teilmengen nacheinander aspiriert werden, indem die Schritte a) bis c) für jede der Teilmengen wiederholt werden.

9. Verfahren zum Pipettieren nach Anspruch 8, **dadurch gekennzeichnet, dass** die Pipettiervorrichtung mehrere Kanäle aufweist und dass die Schritte a) bis c) für jeden Kanal für eine Teilmenge ausgeführt werden, bevor die Schritte a) bis c) für jeden Kanal für die nächste Teilmenge wiederholt werden.

10. Verfahren zum Pipettieren nach einem der Ansprüche 1 - 9, **dadurch gekennzeichnet, dass** das Gas Luft ist.

11. Verfahren zum Pipettieren nach einem der Ansprüche 1 - 10, **dadurch gekennzeichnet, dass** jeder Kanal mit einer die Pipettenöffnung aufweisenden auswechselbaren Pipettenspitze versehen wird und dass die aspirierte vorgegebene Gas-Menge dem 0,5-fachen bis 5-fachen, vorzugsweise dem 0,7-fachen bis 2-fachen, besonders bevorzugt dem 1,5-fachen, des von der Pipettenspitze aufnehmbaren Volumens entspricht.

12. Gasverdrängungs-Pipettiervorrichtung mit wenigstens einem eine Pipettenöffnung aufweisenden Kanal, einer Vorrichtung zum Positionieren der Pipettenöffnung, einer Vorrichtung zum Einstellen eines vorgegebenen Drucks in einer auf eine Flüssigkeitssäule der zu pipettierenden Flüssigkeit einwirkenden Gassäule derart, dass eine gewünschte Menge der Flüssigkeit aspiriert oder dispensiert wird, und einer Steuereinrichtung, wobei die Vorrichtung zum Einstellen eines vorgegebenen Drucks so ausgebildet ist, dass zum Dispensieren einer zuvor aspirierten Flüssigkeit die auf die Flüssigkeitssäule einwirkende Gassäule mit einem einen Überdruck aufweisenden Gasreservoir verbindbar ist, um Gas in die Gassäule einzuspeisen,
wobei die Steuereinrichtung so ausgebildet ist, dass zum Pipettieren eine vorgegebene Aufnahmemenge der Flüssigkeit aus einem Quellgefäß aspiriert und anschließend wenigstens eine Abgabemenge der aspirierten Flüssigkeit, die eine Teilmenge der Aufnahmemenge ist, in ein Zielgefäß dispensiert wird,
**dadurch gekennzeichnet,**
**dass** die Steuereinrichtung so ausgebildet ist, dass vor dem Aspirieren der Aufnahmemenge der Flüssigkeit eine vorgegebene Gas-Menge aspiriert wird, ohne diese anschließend zu dispensieren, wobei beim Aspirieren der vorgegebenen Gas-Menge das Gas mit einem Dampf der Flüssigkeit angereichert wird, so dass während des sich anschließenden Pipettierens nach dem Aspirieren der Aufnahmemenge und beim Dispensieren der wenigstens eine Abgabemenge die von der vorgegebenen Gas-Menge gebildete, im Kanal oberhalb der Flüssigkeitssäule verbliebene Gassäule derart mit dem Dampf der Flüssigkeit angereichert ist, dass eine Erhöhung des Drucks in der Gassäule durch Verdampfen der Flüssigkeit der Flüssigkeitssäule minimiert wird.

13. Gasverdrängungs-Pipettiervorrichtung nach Anspruch 12,
**dadurch gekennzeichnet, dass** die Steuereinrichtung so ausgebildet ist, dass beim Aspirieren der vorgegebenen Gas-Menge das Gas mit dem Dampf der Flüssigkeit angereichert wird, indem die Pipettenöffnung oberhalb der Flüssigkeitsoberfläche des Quellgefäßes positioniert und die vorgegebene Gas-Menge aspiriert wird, wobei die Pipettenöffnung derart über der Flüssigkeitsoberfläche im Quellgefäß positioniert wird, dass das aspirierte Gas mit dem Dampf der im Quellgefäß verdunsteten Flüssigkeit angereichertes Gas ist.

14. Gasverdrängungs-Pipettiervorrichtung nach Anspruch 12 oder 13, **dadurch gekennzeichnet, dass** die Steuereinrichtung so ausgebildet ist, dass beim Aspirieren der vorgegebenen Gas-Menge das Gas mit dem Dampf der Flüssigkeit angereichert wird, indem
a) eine vorgegebene Befeuchtungsmenge der Flüssigkeit aus dem Quellgefäß aspiriert und anschließend wieder in das Quellgefäß derart teilweise dispensiert wird, dass ein den Kanal nicht verschließender Rest dieser Flüssigkeit an der Innenwandung des Kanals verbleibt,
b) die Pipettenöffnung aus der Flüssigkeit der Quellgefäßes herausgehoben und oberhalb der Flüssigkeitsoberfläche des Quellgefäßes positioniert wird und
c) in der Position oberhalb der Flüssigkeitsoberfläche die vorgegebene Gas-Menge derart aspiriert wird, dass das aspirierte Gas zumindest einen Teil des im Schritt a) an der Innenwandung verbliebenen Rests der Flüssigkeit aufnimmt.

15. Gasverdrängungs-Pipettiervorrichtung nach einem der Ansprüche 12 - 14, **dadurch gekennzeichnet, dass** jeder Kanal eine auswechselbare Pipettenspitze aufweist und dass die aspirierte vorgegebene Gas-Menge dem 0,5-fachen bis 5-fachen, vorzugsweise dem 0,7-fachen bis 2-fachen, besonders bevorzugt dem 1,5-fachen, des von der Pipettenspitze aufnehmbaren Volumens entspricht.
